# EUROPEAN PATENT SPECIFICATION

(11) **EP 1 286 557 B1**
(45) Date of publication and mention of the grant of the patent: **14.05.2008**
(21) Application number: 01309800.9
(22) Date of filing: 21.11.2001
(51) Int. Cl.: H04Q 7/22

(54) **A method of sending a multicast message to mobile stations and a radio telecommunications network**
Verfahren zum Senden einer Mehrfachnachricht an Mobilstationen und ein Telekommunikationsnetz
Procédé de transmission pour un message multidestinataire vers stations mobiles et réseau de radiocommunication

(30) Priority: 22.08.2001 GB 0120419
(43) Date of publication of application: 26.02.2003
(73) Proprietor: Lucent Technologies Inc., Murray Hill, New Jersey 07974-0636 (US)
(72) Inventor: Casati, Alessio, Wooton Bassett, Wiltshire S4 7SH (GB); Palat, Sudeep Kumar, Grange Park, Wiltshire SN5 6EE (GB)
(74) Representative: Sarup, David Alexander

(56) References cited:
- EP-A- 0 999 656
- WO-A-01/17289
- WO-A-98/25422
- WO-A-99/59355
- "Definitions and Characteristics of Multicast Channels" TSG RAN WORKING GROUP 2 (RADIO LAYER 2 AND RADIO LAYER 3), 8 March 1999 (1999-03-08), pages 1-11, XP002275698

## Description

### Technical Field

The present invention relates to a method of sending a multicast message to mobile stations of a multicast group in cells of a radio telecommunications network The present invention relates to a radio telecommunications network.

### Background of the Invention

There is a requirement in Universal Mobile Telecommunications Systems UMTS standards to support efficient Multicast services.

The known solution is for the gateway general packet radio system GPRS support node GGSN, which is the point of entry to the UMTS network, to duplicate data streams so as to send data over point to point links over the UMTS network. (GPRS denotes general packet radio system). Using point to point links over the UMTS network is inefficient and uses additional resources; not only network resources but also scarce radio resources. This is because the multicast data is sent over the dedicated point to point links and if there are several users in a cell, the same information is sent over several channels, one for each user.

PCT published patent application WO 99/59355 relates to point-to-multipoint transmission in a mobile communication system and discloses sending a multicast broadcast to all cells belonging to a destination area. The broadcast may be directed to all mobile stations in the cells or to mobile cells belonging to a certain group.

EP 0 999 656 A1 discloses an arrangement in which hand-offis achieved when a mobile terminal moves from one cell in which it is receiving a Multicast transmission to another cell.

### Summary of the Invention

The present invention provides a method of sending a multicast message to mobile stations of a multicast group in cells of a radio telecommunications network, each cell having a base station, comprising in each cell selecting a channel for the multicast message and sending the multicast message on the selected channel for reception by all the mobile stations of the multicast group in that cell, and characterised in that the multicast message is sent only in those cells selected as having mobile stations of the multicast group located therein and in neighbouring cells. The multicast message can be multicast data.

Preferred embodiments of the present invention advantageously address sending data without duplicating data over the radio network by using a multicast radio channel which can be dynamically chosen in each cell. A multicast channel allows multiple selected users who are members of the group to receive multicast packets, allowing multicast data to be sent down just once in a cell to all the users in that cell.

Preferably the locations of mobile stations of the multicast group are tracked and the cells in which the multicast message is sent is selected in consequence. Advantageously in preferred embodiments the multicast area is actively limited to the relevant cells by tracking the user mobility within the radio access network which makes it more efficient than broadcasting over a wider area.

Preferably multicast data is first sent in an area including all cells associated with the radio network and the cells in which mobiles of the multicast group are determined as being located are selected for sending the multicast message. Preferably the locations of mobile stations in the multicast group are determined by information messages from the mobile stations sent in response to the multicast data

Preferably the locations of mobile stations in the multicast group are determined by paging and analysing paging responses. In this way in preferred embodiments a paging procedure can be used to "fine tune" the multicast area.

Preferably the multicast message is buffered and sent once the locations of the mobile stations in the multicast group have been determined.

Preferably the method includes sending a signal including an identifier of the multicast group in advance of the multicast message causing the mobile stations in the multicast group to switch from a low power consumption idle state to an higher power consumption active state. Advantageously in preferred embodiments this is a paging procedure to allow terminals to sleep during idle periods to conserve battery power, in other words the multicast paging procedure allows the mobiles to sleep during idle periods to be woken up only when there is data. Also, the multicast paging method avoids overloading the paging channel.

The present invention further provides a radio telecommunications network comprising cells, each cell having a base station, the base station of each cell that includes one or more mobile station of a multicast group being operative to select a channel for the multicast message and to send the multicast message on the selected channel for reception by all the mobile stations in the multicast group in that cell, and the base station being further operative to send the multicast message only in those cells selected as having mobile stations of the multicast group located there in and in neighbouring cells.

### Brief Description of the Drawings

A preferred embodiment of the present invention will now be described by way of example and with reference to the drawings, in which:
Figure 1 is a diagrammatic illustration of a UMTS/GPRS network, and
Figure 2 is a diagrammatic illustration of selection by the radio network controller RNC of cells for multicast.

### Detailed Description

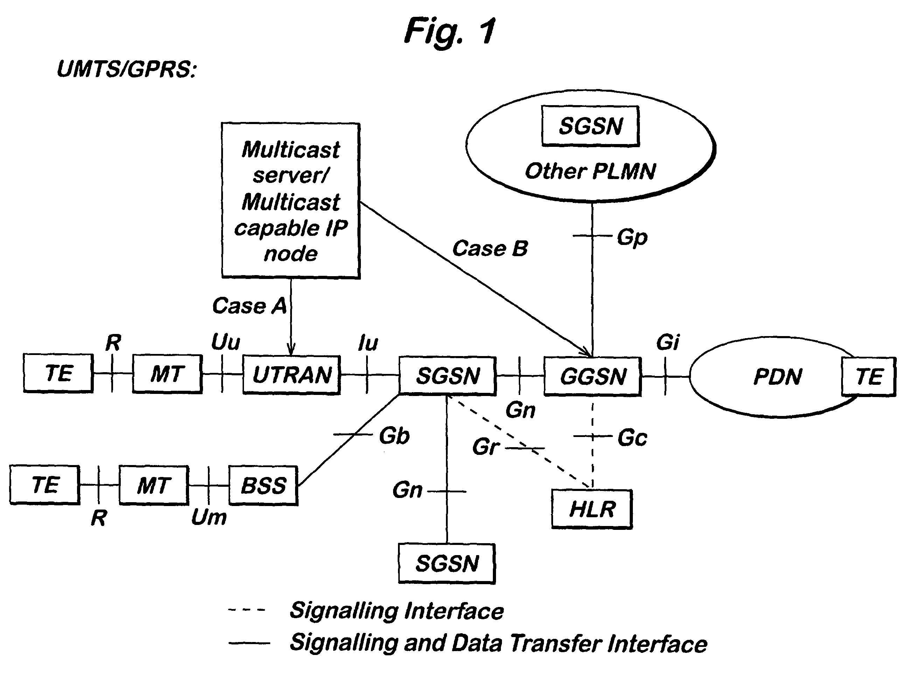

Figure 1 shows the UMTS/GPRS network architecture. The new network element is the Multicast Server/IP multicast capable IP node. In Figure 1, MT denotes the mobile termination of the core network and TE denotes the mobile station.

The support of IP multicast transmissions in GPRS/UMTS core networks can be considered as the problem of how to support multicast in a hierarchical tunnel-based mobility support system. A hierarchical tunnel based mobility support system uses compulsory tunnels from an access point (the base station controller BSC or radio network controller RNC, or another wireless or wireline access network termination node) that can be rearranged hop by hop up to an anchor point.

For a UMTS network, where the signalling protocol used at the hierarchical level associated with the anchor point(in this case the gateway GPRS support node GGSN) is GPRS tunnelling protocol GTP control plane GTP-C, and the immediately lower hierarchical level protocol is radio access network application part RANAP (between serving GPRS support node SGSN and radio network controller RNC), it is the radio network controller RNC that is the access point. For user data, the GTP user plane GTP-U is used from the GGSN to the RNC. Alternatively, for second generation 2G GPRS functionality the access point is the serving GPRS support node SGSN.

When a mobile node MN is expecting multicast data, a PDP context is set up to that mobile node MN.

### Access Network: Procedures in the radio network controller RNC

Data for multicast is either sent directly to the radio network controller RNC or via the GTP tunnel from the GGSN. The following describes the procedures within the radio network controller RNC.

Data is sent down a "multicast" channel. This multicast channel can be any of the physical channels already defined in UMTS or a new one. Each mobile node MN that belongs to the multicast group is informed of the channel type and details by explicit signalling. These mobile nodes MNs then pick up the multicast channel. The choice of the channel is based on the quality of service QoS requirements. The channel details may change from cell to cell or over time. Any such changes - either due to mobile node movement to a different cell or due any change initiated by the network - are also indicated to all the mobile nodes concerned.

Multicast data is only sent to the relevant cells to ensure reception by the mobile nodes MNs. These cells could be decided based on the level of information available to the access point (radio network controller RNC) at that time. This would be at least the cells having mobile nodes in the multicast group, and, at most the paging area of all the mobile nodes MNs associated with in the radio network controller RNC. The cells to which multicast data is sent is then reduced to eliminate transmission to unnecessary cells once the location of the users are known more accurately. Identifying the location of the users, can for example, be based on paging/paging response combinations or mobile node MN initiated cell updates on detection of multicast data.

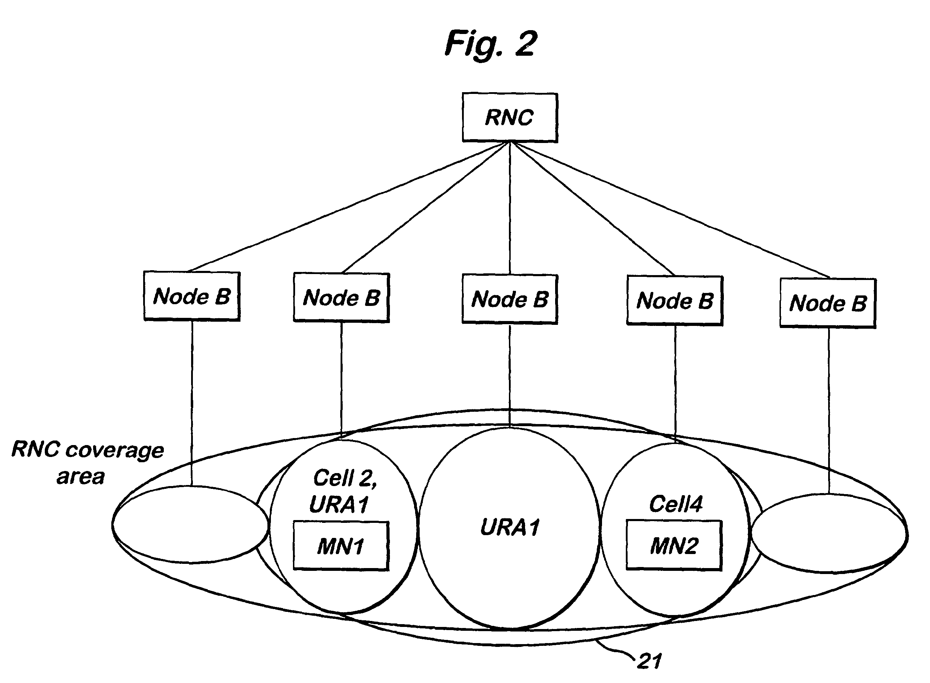

As shown in Figure 2, to illustrate if mobile node MN1 and mobile node MN2 belong to a multicast group, radio network controller RNC knows that mobile node MN1 is located in UTRAN registration area URA1 and mobile node MN2 is in cell 4. UTRAN denotes UMTS terrestrial radio access network, and as shown in Figure 2 each radio network controller controls several base station antennas (Node B's) each having an associated coverage area (cell). Thus the initial multicast area 21 is UTRAN registration area URA1 and Cell1 When location of mobile node MN1 is known at a cell level, the multicast area is then reduced to cell 2 and Cell 4. In some embodiments, the multicast channels are also made available in neighbouring cells to those where the mobile nodes in the muticast group are, depending on QoS level, so that the handoff may happen with minimum impact.

### Conserving Battery power

Multicast data transmission can be discontinuous with idle periods in between. To conserve battery power, it is desirable to avoid each mobile node MN in the multicast group having to monitor the multicast channel at all times. This is achieved by sending a paging message in the paging channel addressed with a special identifier that identifies all users belonging to this multicast group associated with the radio network controller RNC. This identifier must be communicated at set-up time to the mobile node MN. The paging message is sent to the cells which cover the region of uncertainty of user locations.

The users can be in different states with respect to the radio network controller RNC: Cell-dedicated channel DCH with and without softhandover, Cell-FACH, PCH or URA-PCH. In states of cell-dedicated channel DCH without softhandover, cell- FAH and Cell- PCH, where the user is known at a cell level, the paging procedure is limited to the cell the user is located in. On the other hand in URA-PCH state, the paging area and multicast area must include the UTRAN registration area URA. Paging responses from users in URA- PCH state or idle state are then used to reduce the multicast area as described above. Another option is to buffer data until the paging response is received and then include only those cells the mobile nodes of the multicast group are located in in the multicast area. Other methods to optimise the multicast area are possible.

Changes in paging area between cell specific and larger paging areas such as UTRAN registration area URA are controlled explicitly by the radio network controller RNC using messaging and/or timers of idle periods.

### Encryption

The multicast radio bearers could be encrypted by the source radio network controller SRNC using a locally generated key applicable for all the users belonging to the group. A new key is then issued periodically to all users using dedicated signalling radio bearer channels. The key is made available to new users when they join the group or move from one radio network controller RNC to another.

Another option is to use application level encryption.

## Claims

1. A method of sending a multicast message to mobile stations (MN1, MN2) of a multicast group in cells of a radio telecommunications network, each cell having a base station (Node B), comprising in each cell selecting a channel for the multicast message and sending the multicast message on the selected channel for reception by all the mobile stations of the multicast group in that cell, and **characterised in that** the multicast message is sent only in those cells selected as having mobile stations of the multicast group located therein and in neighbouring cells.

2. A method of sending a multicast message according to claim 1, in which the locations of mobile stations of the multicast group are tracked and the cells in which the multicast message is sent is selected in consequence.

3. A method of sending a multicast message according to claim 1 or 2, in which multicast data is first sent in an area including all cells associated with the radio network, and the cells in which mobiles of the multicast group are determined as being located are selected for sending the multicast message.

4. A method of sending a multicast message according to claim 3, in which the locations of mobile stations in the multicast group are determined by information messages from the mobile stations sent in response to the multicast data

5. A method of sending a multicast message according to any preceding claim, in which the locations of mobile stations in the multicast group are determined by paging and analysing paging responses.

6. A method of sending a multicast message according to any preceding claim, in which the multicast message is buffered and sent once the locations of the mobile stations in the multicast group have been determined.

7. A method of sending a multicast message according to any preceding claim, including sending a signal including an identifier of the multicast group in advance of the multicast message causing the mobile stations in the multicast group to switch from a low power consumption idle state to an higher power consumption active state.

8. A radio telecommunications network comprising cells, each cell having a base station (Node B), the base station of each cell that includes one or more mobile station (MN1, MN2) of a multicast group being operative to select a channel for the multicast message and to send the multicast message on the selected channel for reception by all the mobile stations in the multicast group in that cell, and the base station being further operative to send the multicast message only in those cells selected as having mobile stations of the multicast group located therein and in neighbouring cells.

## Patentansprüche

1. Verfahren zum Senden einer Mehrfachnachricht an Mobilstationen (MN1, NM2) einer Mehrfachgruppe in Zellen eines Telekommunikationsnetzes, wobei jede Zelle eine Basisstation (Node B) aufweist und jede Zelle das Auswählen eines Kanals für die Mehrfachnachricht und das Senden der Mehrfachnachricht auf dem ausgewählten Kanal für den Empfang durch alle Mobilstationen der Mehrfachgruppe in dieser Zelle umfasst, und **dadurch gekennzeichnet, dass** die Mehrfachnachricht nur in jenen Zellen gesendet wird, die dafür ausgewählt wurden, dass sie Mobilstationen der Mehrfachgruppe aufweisen, sie sich darin sowie in den benachbarten Zellen befinden.

2. Verfahren zum Senden einer Mehrfachnachricht nach Anspruch 1, bei dem die Positionen der Mobilstationen der Mehrfachgruppe verfolgt werden und die Zellen, in denen die Mehrfachnachricht gesendet wird, entsprechend ausgewählt werden.

3. Verfahren zum Senden einer Mehrfachnachricht nach Anspruch 1 oder 2, bei dem Mehrfachdaten zuerst in einem Bereich gesendet werden, der alle dem Funknetz zugeordneten Zellen einschließt, und bei dem die Zellen, in denen Mobil[stationen] der Mehrfachgruppe als dort befindlich bestimmt werden, zum Senden der Mehrfachnachricht ausgewählt werden.

4. Verfahren zum Senden einer Mehrfachnachricht nach Anspruch 3, bei dem die Positionen der Mobilstationen in der Mehrfachgruppe durch Informationsnachrichten von den Mobilstationen bestimmt werden, die als Antwort auf die Mehrfachdaten gesendet werden.

5. Verfahren zum Senden einer Mehrfachnachricht nach einem der vorhergehenden Ansprüche, bei dem die Positionen der Mobilstationen in der Mehrfachgruppe durch ein Personenrufsystem und das Analysieren der Personenrufantworten bestimmt werden.

6. Verfahren zum Senden einer Mehrfachnachricht nach einem der vorhergehenden Ansprüche, bei dem die Mehrfachnachricht in einem Pufferspeicher abgelegt wird und gesendet wird, sobald die Positionen der Mobilstationen in der Mehrfachgruppe bestimmt worden sind.

7. Verfahren zum Senden einer Mehrfachnachricht nach einem der vorhergehenden Ansprüche, umfassend das Senden eines die Kennung der Mehrfachgruppe umfassenden Signals vor der Mehrfachnachricht, welches die Mobilstationen in der Mehrfachgruppe veranlasst, von einem Ruhezustand mit niedrigem Stromverbrauch zu einem aktiven Zustand mit höherem Stromverbrauch umzuschalten.

8. Telekommunikationsnetz, umfassend Zellen, wobei jede Zelle eine Basisstation (Node B) aufweist, wobei die Basisstation jeder Zelle, die eine oder mehrere Mobilstationen (MN1, MN2) einer Mehrfachgruppe umfasst, dazu geeignet ist, einen Kanal für die Mehrfachnachricht auszuwählen und die Mehrfachnachricht an den ausgewählten Kanal zum Empfang durch alle Mobilstationen in der Mehrfachgruppe zu senden, und wobei die Basisstation weiterhin dafür geeignet ist, die Mehrfachnachricht nur an diejenigen Zellen zu senden, die dafür ausgewählt wurden, dass sie Mobilstationen der Mehrfachgruppe aufweisen, die sich in ihnen und in den benachbarten Zellen befinden.

## Revendications

1. Procédé d'envoi d'un message de multidiffusion à des stations mobiles (MN1, MN2) d'un groupe de multidiffusion dans les cellules d'un réseau de télécommunication sans fil, chaque cellule comportant une station de base (Noeud B), comprenant dans chaque cellule la sélection d'un canal pour le message de multidiffusion et l'envoi du message de multidiffusion sur le canal sélectionné pour qu'il soit reçu par toutes les stations mobiles du groupe de multidiffusion dans cette cellule, et **caractérisé en ce que** le message de multidiffusion est envoyé uniquement aux cellules sélectionnées comme comportant les stations mobiles du groupe de multidiffusion situées à l'intérieur et dans les cellules voisines.

2. Procédé d'envoi d'un message de multidiffusion selon la revendication 1, dans lequel les localisations des stations mobiles du groupe de multidiffusion sont suivies et les cellules dans lesquelles le message de multidiffusion est envoyé sont sélectionnées en conséquence.

3. Procédé d'envoi d'un message de multidiffusion selon la revendication 1 ou 2, dans lequel les données de multidiffusion sont envoyées d'abord dans une zone comprenant toutes les cellules associées au réseau sans fil, et les cellules dans lesquelles les stations mobiles du groupe de multidiffusion sont déterminées comme étant localisées sont sélectionnées pour envoyer le message de multidiffusion.

4. Procédé d'envoi d'un message de multidiffusion selon la revendication 3, dans lequel les localisations des stations mobiles dans le groupe de multidiffusion sont déterminées au moyen de messages d'information en provenance des stations mobiles envoyés en réponse aux données de multidiffusion.

5. Procédé d'envoi d'un message de multidiffusion selon l'une quelconque des revendications précédentes, dans lequel les localisations des stations mobiles dans le groupe de multidiffusion sont déterminées par radiomessagerie et analyse des réponses de radiomessagerie.

6. Procédé d'envoi d'un message de multidiffusion selon l'une quelconque des revendications précédentes, dans lequel le message de multidiffusion est mis en mémoire tampon et envoyé une fois que les localisations des stations mobiles dans le groupe de multidiffusion ont été déterminées.

7. Procédé d'envoi d'un message de multidiffusion selon l'une quelconque des revendications précédentes, comprenant l'envoi d'un signal comprenant un identifiant du groupe de multidiffusion avant le message de multidiffusion, ce qui amène les stations mobiles dans le groupe de multidiffusion à commuter d'un état inactif à faible consommation de puissance à un état actif à consommation de puissance plus forte.

8. Réseau de télécommunications sans fil comprenant des cellules, chaque cellule comportant une station de base (Noeud B), la station de base de chaque cellule qui comprend une ou plusieurs stations mobiles (MN1, MN2) d'un groupe de multidiffusion pouvant fonctionner pour sélectionner un canal pour le message de multidiffusion et pour envoyer le message de multidiffusion sur le canal sélectionné pour qu'il soit reçu par toutes les stations mobiles dans le groupe de multidiffusion dans cette cellule, et la station de base pouvant en outre fonctionner pour envoyer le message de multidiffusion uniquement aux cellules sélectionnées comme comportant les stations mobiles du groupe de multidiffusion situées à l'intérieur et dans les cellules voisines.
